# NEUE EUROPÄISCHE PATENTSCHRIFT

(11) **EP 1 523 729 B2**
(45) Veröffentlichungstag und Bekanntmachung des Hinweises auf die Entscheidung über den Einspruch: **12.08.2015**
(45) Hinweis auf die Patenterteilung: 14.04.2010
(21) Anmeldenummer: 03763835.0
(22) Anmeldetag: 14.07.2003
(51) Int. Cl.: G06K 19/07, G06K 19/077, G07D 7/00

(54) **TRANSPONDER FÜR FLACHSTÜCKARTIG AUSGEBILDETE ARTIKEL**
TRANSPONDER FOR FLAT ARTICLES
TRANSPONDEUR POUR DES ARTICLES PLATS

(30) Priorität: 15.07.2002 DE 10232007
(43) Veröffentlichungstag der Anmeldung: 20.04.2005
(73) Patentinhaber: Giesecke & Devrient GmbH, 81677 München (DE)
(72) Erfinder: FINKENZELLER, Klaus, 85774 Unterföhring (DE); SCHRÖDER, Sönke, 81541 München (DE)
(74) Vertreter: Höhfeld, Jochen
(86) Internationale Anmeldenummer: PCT/EP2003/007595
(87) Internationale Veröffentlichungsnummer: WO 2004/008386

(56) Entgegenhaltungen:
- EP-A- 0 704 816
- EP-A- 0 821 406
- WO-A-00/07151
- WO-A-02/37414
- WO-A1-02/02350
- WO-A1-03/007231
- WO-A2-97/21184
- WO-A2-02/089338
- DE-A- 19 630 648
- JP-A- 2000 123 136
- JP-A- 2001 005 934
- JP-A- 2002 055 216
- US-A- 5 430 441
- US-A- 5 523 749
- FINKENZELLER, KLAUS: 'RFID-Handbuch', Bd. 2., 2000, HANSER, CARL, MÜNCHEN
- KILIAN U. ET AL: 'Lexikon der Physik', Bd. 3, 1999, SPEKTRUM, AKADEMISCHER VERLAG, HEIDELBERG
- VAN RENESSE R.: 'Optical Document Security', Bd. 2, 1998, ARTECH HOUSE, BOSTON

## Beschreibung

Die Erfindung betrifft flachstückartig ausgebildete Artikel wie Chipkarten, Wertdokumente, Sicherheitspapiere und dergleichen mit Transponder.

Bei der folgenden Beschreibung wird insbesondere Bezug genommen auf die Ausgestaltung von Ausweisen und Chipkarten, wenngleich die Erfindung gleichermaßen bei anderen flachstückartigen Gegenständen einsetzbar ist, so zum Beispiel bei Sicherheitspapieren und Wertdokumenten etc.

Im Sinne der Erfindung bezeichnet "Sicherheitspapier" das unbedruckte Papier, das Echtheitsmerkmale, wie im Volumen vorgesehene Lumineszenzstoffe, einen Sicherheitsfaden oder dergleichen, aufweisen kann. Es liegt üblicherweise in quasi endloser Form vor und wird zu einem späteren Zeitpunkt weiterverarbeitet.

Als "Wertdokument" wird ein Dokument bezeichnet, das für seinen bestimmungsgemäßen Gebrauch fertig gestellt ist. Dabei kann es sich beispielsweise um ein bedrucktes Wertpapier, wie eine Banknote, Urkunde oder dergleichen, eine Ausweiskarte, einen Pass oder ein sonstiges, eine Absicherung benötigendes Dokument handeln.

Auf und in flachstückartigen Artikeln wie Chipkarten und dergleichen ausgebildete Transponder enthalten im allgemeinen einen Transponderchip und eine Antenne, wobei die Antenne als Antennenspule mit mehreren Windungen ausgebildet ist. Die relativ hohe Induktivität der aus mehreren Spulenwindungen bestehenden Antennenspule erfordert zur Ergänzung mit einer Kapazität zur Einstellung auf eine vorgegebene Resonanzfrequenz keine separat ausgebildeten Kondensatoren, die durch die Spule und andere Elemente gebildete parasitäre Kapazität ist im Allgemeinen ausreichend.

Eine möglichst einfach ausgebildete Antennenspule enthält jedoch nur eine einzige Spulenwindung, da eine solche kreuzungsfrei durch beispielsweise Aufdrukken einer Silberleitpaste auf ein Substrat hergestellt werden kann. Eine einzelne Spulenwindung hat im allgemeinen aber nur eine relativ geringe Induktivität, so dass zur Einstellung auf eine gegebene Resonanzfrequenz häufig eine Kapazität benötigt wird, die größer ist als die üblicherweise anzutreffenden parasitären Kapazitäten.

Zur Bereitstellung einer solchen größeren oder "externen" Kapazität in Form eines Kondensators sind aus dem Stand der Technik die WO 00/07151 A, die USA-5 523 749, die EP-A-0 821 406 und die EP-A-0 704 816 bekannt.

Die WO 00/07151 offenbart ein Sicherheitspapier zur Erhöhung der Fälschungssicherheit von Wertpapier, beispielsweise Banknoten, in das ein elektronischer Schaltkreis eingebettet ist. Zur Echtheitsprüfung wird an den Schaltkreis ein trägerfrequentes Eingangssignal übertragen und ein von dem Schaltkreis darauf ansprechend ausgesendetes Ausgangssignal, das ein Echtheitsmerkmal darstellt, erfaßt.

US 5 523 749, die den Oberbegriff der unabhängigen Ansprüche bildet, offenbart ein Identifikationssystem mit einem elektronischen Etikett zur Verarbeitung von Artikeln, wie z.B. Gepäck oder Transportgut. Das System benutzt das Prinzip der elektromagnetischen Kommunikation bei welchem eine Abfrageeinrichtung, die einen Sender und einen Empfänger enthält, ein elektromagnetisches Feld erzeugt, welches das elektronische Etikett, das eine Etikettempfangsantenne enthält, passiert. Das elektronische Etikett ist an dem zu verarbeitenden Artikel befestigt und enthält Mittel zum Empfang des elektromagnetischen Feldes und Mittel zum Erzeugen von periodisch wiederholten Antwortsignalen des Etiketts. Das System enthält einen Empfänger zum Detektieren und Dekodieren des Antwortsignales des Etikettes. Das elektronische Etikett antwortet periodisch so lange wie es sich innerhalb des elektromagnetischen Feldes befindet und das Feld für einen Zeitraum aufrecht erhalten wird, der größer ist als das Zeitintervall zwischen den periodisch wiederholten Antworten des Etiketts. Das elektronische Etikett enthält auch Mittel zum Bestimmen des Intervalls zwischen den periodisch wiederholten Antwortsignalen des Etiketts ohne Bezug zu Taktsignalen, die extern zu dem Etikett sind. Das Intervall zwischen den Antwortsignalen des Etiketts variiert von Etikett zu Etikett und ist größer als die Zeit, die zu einer Antwort des Etiketts benötigt wird.

EP 0 821406 A2 offenbart ein Verfahren zum elektrischen Verbinden eines integrierten Schaltkreises mit wenigstens einem elektrischen Leiter auf einem flexiblen dielektrischen Substrat mit einer IC-Befestigungsfläche und wenigstens einem darauf angeordneten Schwingkreis. Der Schwingkreis wird aus zwei leitenden Flächen gebildet, die auf zwei gegenüberliegenden Hauptflächen des flexiblen Substrates angeordnet sind. Die leitfähigen Muster sind miteinander elektrisch verbunden um eine Spule und einen Kondensator zu bilden, wobei die Spule als eine Antenne wirkt. Die IC-Befestigungsfläche auf dem flexiblen Substrat wird gereinigt und dann das flexible Substrat in einer fixierten Position in einer Vorrichtung fixiert, um eine wesentliche Bewegung davon zu verhindern. Der IC wird an der IC-Befestigungsfläche gesichert. Der IC wird mittels Drahtbonden mit wenigstens einem elektrischen Leiter des Schwingkreises verbunden. Eine Schutzschicht wird über dem IC und dem Bonddraht angebracht, um den Bonddraht vor Beschädigung durch äußere Kräfte zu schützen.

EP 0 704 816 A2 offenbart einen Hochfrequenztransponder, der das äußere Ende einer aufgespulten Antennenwindung mit einer Transponderschaltung, die im Inneren der Windung angeordnet ist, mit einer Leitung verbindet, welche die Windungen überkreuzt und von den Windungen durch ein dielektrisches Material getrennt ist. Die Breite der Leitung ist wesentlich größer als die Breite der Antennenleitung, was dazu führt, daß Kapazitäten an den Kreuzungsstellen entstehen, die eine Resonanzfrequenz zur Kommunikation mit einer Transponderschaltung bei einer vorbestimmten Hochfrequenz bestimmen. Ein optionaler diskreter Kondensator kann auch benutzt werden, um die Kapazität auf einen gewünschten Wert zu erhöhen. Alle Komponenten des Transponders sind auf einer Seite eines flexiblen Substrates ausgebildet, wobei die gegenüberliegende Seite davon mit einem Klebstoff abgedeckt ist, der mit einem abziehbaren Blatt abgedeckt ist, was es erlaubt, den Transponder mit Paketen als ein Teil eines Paketidentifikationssystemes zu verbinden.
Die WO03/007231 A1 beschreibt eine Datenträgeranordnung mit einem internen RFID-System, bei dem als Transponder ein Schwingkreis verwendet wird. Der Kondensator des Schwingkreises wird durch sich überlappende, elektrisch leitende Flächen eines Hologramm-Moduls und eines Chip-Moduls gebildet. Eine Manipulation führt zu einer Änderung der Resonanzfrequenz. Für eine Abstimmung der Resonanzfrequenz muss eine veränderbare Kapazität vorgesehen sein.
Die WO 97/21184 A2 beschreibt ein Laminat mit eingeprägten Oberflächenstrichhologrammen, die mit einer metallischen Reflexionsschicht hinterlegt sind. Die Metallisierung bildet Schwingkreise bestehend aus Antennen und Kapazitäten. Die ausgesendeten Resonanzfrequenzen dienen als Echtheitsmerkmal. Die metallisierten Kondensatorflächen sind auf einer Folie so angeordnet, dass sie überlappend um ein Dokument gefaltet werden können. Eine Justierung oder Einstellung der Resonanzfrequenz ist damit allerdings nicht möglich. Die WO 02 / 089338 A2 ist Stand der Technik nach Art. 54 (3) EPÜ . Sie beschreibt eine Chipkarte mit einer aufgedruckten Antenne, wobei Chip und Antenne einen Transponder bilden. Die Beläge eines Kondensators werden durch sich auf einer Fläche gegenüberliegende Bereiche der Antennenspule gebildet.

Nachteilig der im Stand der Technik genannten Kapazität ist deren hoher Preis in der Herstellung und deren mangelnde Qualität, die für speziell bei Chipkarten, Wertdokumenten, Sicherheitspapieren und dergleichen benötigten Qualität der Kapazität ist.

Die Erfindung zielt allgemein ab auf die Bereitstellung einer solchen größeren oder "externen' Kapazität in Form eines Kondensators. Hierbei versteht sich jedoch, dass ein solcher Kondensator in Verbindung mit einem Transponder für Chipkarten, Wertdokumenten und dergleichen in Verbindung mit Antennenspulen eingesetzt werden kann, die lediglich eine einzige Spulenwindung besitzen.

Die üblichen Substrat-Materialien bei den hier interessierenden Artikeln wie zum Beispiel Chipkarten und Wertdokumenten, besitzen jedoch eine relativ niedrige Dielektrizitätskonstante. Hinzu kommt, dass das in der Regel aus Papier bestehende Substrat eine beträchtliche Dicke aufweist, so dass ein Kondensator mit zwei Belägen auf einander abgewandten Seiten eines Papier-Substrats nur eine geringe Kapazität besitzt.

Der Erfindung liegt die Aufgabe zugrunde, einen Transponder, sowie ein Sicherheitspapier und ein Wertdokument mit einem Transponder der eingangs genannten Art anzugeben, bei dem mit einfachen Mitteln ein spezieller Kondensator zur Verfügung gestellt wird, der Teil des Transponders ist.

Gelöst wird diese Aufgabe durch einen Gegenstand gemäß Anspruch 1. Der Artikel ist flachstückartig ausgebildetet, wobei der Artikel ein Substrat, einen Transponderchip, eine auf das Substrat aufgedruckte oder darin eingeätzte Antennenspule mit mindestens einer Spulenwindung und mindestens einen Kondensator umfasst, wobei auf dem Substrat mindestens ein Belag (Kondensatorelektrode) des Kondensators durch Aufdrucken oder Ätzen gebildet ist, wobei mindestens der eine Belag des Kondensators integral mit der mindestens einen Spulenwindung ausgebildet ist. Das heißt, die mindestens eine Spulenwindung bildet zusammen mit dem einen Belag des Kondensators (der einen Kondensatorelektrode) ein zusammenhängendes Schichtmuster. Der andere Belag des Kondensators wird durch mindestens ein Element des flachstückartig ausgebildeten Artikels, das eine metallisierte Fläche enthält, gebildet, wobei der andere Belag des Kondensators auf der gleichen Seite des Substrats wie der eine Belag ausgebildet ist oder der andere Belag des Kondensators auf der dem einen Belag abgewandten Seite des Substrats ausgebildet ist, wobei das Element Beugungsstrukturen enthält.Die Erfindung macht besonders vorteilhaften Gebrauch von dem Umstand, dass bei den meisten hier interessierenden Artikeln die eine Seite des Substrats als Element eines flachstückartig ausgebildeten Artikels einen sogenannten Leadstreifen trägt, das ist ein bandförmiges Sicherheitselement aus einem Trägermaterial, vorzugsweise einer Kunststofffolie, mit einer metallischen Beschichtung, wobei das Sicherheitselement zusätzliche Beugungsstrukturen aufweist.

Eine bevorzugte Idee der Erfindung liegt nun darin, den einen Belag des Kondensators geometrisch so in dem Umriß des Substrats anzuordnen, dass sich der eine Belag einerseits und der Leadstreifen oder ein Teil des Leadstreifens andererseits überlappen. Hierdurch bildet der Leadstreifen den anderen Belag des Kondensators oder die Gegenelektrode des Kondensators. Anstelle des Leadstreifens können in anderen Ausführungsformen, die nicht Teil der Erfindung sind, auch andere Sicherheitselemente, die eine metallisierte Fläche enthalten, beispielsweise mit leitfähiger Farbe gedruckte Strukturen, z.B. Guillochen, als Gegenelektrode verwendet werden.

In einer speziellen Ausgestaltung der Erfindung können zum Beispiel auf einem Papiersubstrat gemeinsam mit dem Muster der einen Spulenwicklung zwei Kondensatorelektroden durch Aufdrucken oder Ätzen gebildet werden. Die Kondensatorelektroden befinden sich dann an der Stelle, an der sich - auf der abgewandten Seite des Substrats - der Leadstreifen befindet. Da das üblicherweise aus Papier bestehende Substrat zwischen den beiden Kondensatorbelägen (hier: zwei erste Beläge und ein zweiter, durchgehender Belag in Form des Leadstreifens) nur eine geringe Dielektrizitätskonstante besitzt, und dies noch bei einer vergleichsweisen großen Dicke, ist die Kapazität des Kondensators nur gering. In einer besseren Version wird daher auf der gleichen Seite des Substrats, auf der sich der eine Belag befindet, auch der Leadstreifen oder eine zusätzliche aufgedruckte leitende Schicht gebildet, wobei zwischen den beiden Kondensatorelektroden eine dünne Lackschicht vorhanden ist. Diese Lackschicht zwischen dem einen Belag des Kondensators und dem anderen Belag (der die Form eines Leadstreifens oder eines dünnen aufgedruckten Streifens aus leitendem Material besitzt) kann sehr dünn sein und gleichzeitig eine hohe Dielektrizitätskonstante besitzen, so daß man beträchtliche Kapazitätswerte erhält. Die beiden Kondensatoren können symmetrisch zu der einzelnen Spulenwindung ausgebildet sein und sind mit dem Transponderchip parallel verschaltet, wodurch sich die Kapazitäten der Kondensatoren addieren.

In einer besonders bevorzugten Ausführungsform ist der die Gegenelektrode bildende Leadstreifen oder die aufgedruckte Silberleitpaste bzw. die leitfähige Farbe mit einer derartigen Flächenerstreckung versehen, dass der Transponderchip überlappt wird. Hierdurch wird der Chip gegen Manipulationen geschützt. Jegliche Manipulation würde durch eine Beschädigung des Leadstreifens bzw. der aufgedruckten Silberpaste oder leitfähigen Farbe sofort ersichtlich sein.

Um die Kapazität noch zu steigern, kann man auf die erfindungsgemäße Grund-Kondensatorstruktur noch eine Zusatzschicht in Form einer Kombination aus einem Substrat und eines Leitermaterialstreifens aufbringen. Man kann eine Anordnung mit aufeinander abgewandten Seiten des Substrats befindlichen Kondensatorbelägen kombinieren mit einer Anordnung, bei der die Kondensatorbeläge auf derselben Seite des Substrats ausgebildet sind.

Ein spezieller Anwendungsfall der Erfindung sind Reisepässe. Diese enthalten üblicherweise einen vorderen und einen hinteren Deckel sowie dazwischen eingefügte Datenblätter. Speziell für solche Anwendungen gibt es ein Verfahren zum Herstellen eines Transponders mit folgenden Schritten:

Zunächst wird auf ein erstes Substrat ein mit einer äußeren Isolierschicht versehenes Element, das eine metallisierte Fläche enthält, wobei das Element Beugungsstrukturen enthält, aufgebracht. Das Substrat ist dabei zum Beispiel der Deckel eines Passes. Nach dem Aufbringen des Elements ist die äußere Isolierschicht von dem Deckel des Passes abgewandt.

Auf ein zweites Substrat, typischerweise das Datenblatt des Passes, wird ein Belag eines Kondensators aufgebracht, typischerweise zusammen mit der als einzelne Spulenwindung ausgebildeten Antennenspule. Das zweite Substrat trägt außerdem den Transponderchip. Dieses zweite Substrat wird dann so auf das erste Substrat aufgeklebt, dass das auf dem ersten Substrat befindliche Element und der auf dem zweiten Substrat befindliche Kondensatorbelag einander überlappen.

Im Rahmen der vorliegenden Beschreibung werden Begriffe wie "Vorderseite" und "Rückseite" dazu verwendet, die Seitenzuordnung bezüglich eines Substrats zu verdeutlichen, ohne dass die Begriffe "Vorderseite" und "Rückseite" jedoch einschränkend zu verstehen sind. Der Begriff "Vorderseite" soll hier insbesondere diejenige Seite eines Substrats bezeichnen, die mit Text und/ oder Graphikelementen versehen ist. Die "Rückseite" des Substrats ist die dieser Textseite abgewandte Seite.

Im folgenden werden Ausführungsbeispiele der Erfindung anhand der Zeichnung näher erläutert. Es zeigen:
Figur 1 eine perspektivische Ansicht einer mit einem Transponder versehenen Ausweiskarte,
Figur 2 eine Schnittansicht durch die Karte nach Figur 1,
Figur 3 eine Schnittansicht durch eine Karte gemäß einer weiteren Ausführungsform der Erfindung, und
Figur 4 eine noch getrennte Anordnung mit zwei bestückten Substraten, die zur Herstellung eines Passes aufeinandergeklebt werden.

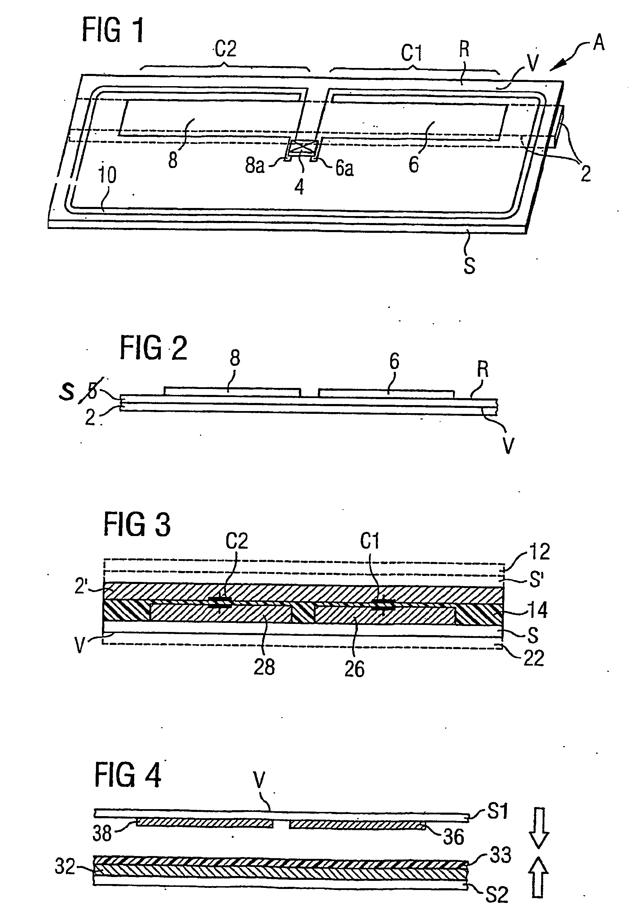

In Figur 1 ist eine flachstückartige Ausweiskarte A mit einem mit übertriebener Dicke dargestellten Papiersubstrat S dargestellt. Auf der nicht zu sehenden Vorderseite V der Ausweiskarte A befindet sich hier nicht zu sehender Text sowie gegebenenfalls Graphikelemente und dergleichen. Als Sicherheitsmerkmal befindet sich auf der Vorderseite V außerdem ein von links nach rechts durchgehender Leadstreifen 2, der als Sicherheitsmerkmal ausgebildet ist und zu diesem Zweck Beugungsstrukturen enthält.

Auf der Rückseite R des Substrats S ist durch Aufdrucken mit leitender Silberpaste ein Leitungsmuster gebildet, hier bestehend aus einer Antennenspule in Form einer einzelnen Spulenwindung 10 und eines ersten Belags 6 und eines zweiten Belags 8 zweier Kondensatoren C1 und C2. Die beiden Beläge oder Elektroden 6 und 8 der Kondensatoren C1 bzw. C2 bilden jeweils den "einen Belag", während die Gegenelektrode oder der "andere Belag" durch solche Bereiche des auf der Vorderseite V befindlichen Leadstreifens 2 gebildet wird, die sich mit den Belägen 6 und 8 überlappen.

Auf Verlängerungen 6a und 8a der Kondensatorbeläge 6 und 8 und mit diesen elektrisch verbunden befindet sich ein Transponderchip 4. Die elektrische Verschaltung der durch die einzelne Spulenwindung 10 gebildeten Antennenspule, der Kondensatoren C1 und C2 und des Transponderchips 4 ist hier nicht näher beschrieben und dargestellt, da sie zum Stand der Technik gehört. Wesentlicher Punkt der vorliegenden Erfindung ist die hier dargestellte Topologie und Schichtanordnung der in Figur 1 gezeigten Elemente.

Figur 2 zeigt die Anordnung von Figur 1 im Querschnitt. Man erkennt einen Teil des Leadstreifens 2 auf der Vorderseite V und die beiden Beläge 6 und 8 des ersten und des zweiten Kondensators auf der Rückseite R des Substrats S.

Das aus Papier bestehende Substrat S hat eine relativ große Dicke, außerdem hat Papier eine relativ geringe Dielektrizitätskonstante. Geht man von gleich großer Kapazität C der beiden Kondensatoren C1 und C2 aus, so ergibt sich bei deren Serienschaltung eine Gesamtkapazität von 1/2 C, bei Parallelschaltung eine Kapazität von 2 C. Die jeweils einzelne Kapazität C errechnet sich nach der Formel (∑·A)/d, wobei ∑ die Dielektrizitätskonstante des Substrats S, A die wirksame Fläche (jeweils entsprechend etwa der Fläche des Belags 6 bzw. 8) und d die Dicke des Substrats ist.

Um die Kapazität der beiden Kondensatoren C1 und C2 zu steigern, zeigt Figur 3 eine Ausführungsform, bei der auf einem Papiersubstrat S zwei Kondensatorbeläge 26 und 28 (durch Aufdrucken eines leitenden Materials, beispielsweise einer Silberpaste, oder durch Ätzen einer leitenden Beschichtung auf dem Substrat) gebildet sind. Die Kondensatorbeläge 26 und 28 sind mit einer dünnen Lackschicht 14 bedeckt, und auf dieser Lackschicht 14 befindet sich der andere Belag der jeweiligen Kondensatoren C1 und C2 in Form eines Leadstreifens 2'. Dieser Leadstreifen 2' ist als Sicherheitsmerkmal ausgebildet.. Anstelle eines aufgebrachten Leadstreifens 2' kann auch eine Schicht aus Silberpaste aufgedruckt sein.

Zur Kapazitätssteigerung kann gemäß Figur 3 noch ein zusätzliches Substrat S' auf dem Leadstreifen 2' zusammen mit einem weiteren Leadstreifen (oder einer aufgedruckten leitenden Paste) 12 angeordnet sein. Durch den Leadstreifen 12 lässt sich die Kapazität zusätzlich erhöhen.

Alternativ zu dieser zusätzlichen Kapazitätserhöhung in Form des Leadstreifens 12 kann dazu auf der Vorderseite V des Substrats S ein weiterer Leadstreifen 22 ausgebildet sein.

Figur 4 zeigt eine Ausführungsform, bei der im Zuge der Herstellung eines Passes auf den Deckel des Passes, hier dargestellt in Form eines Substrats S2, ein mit einer Isolierschicht 33 versehener Leadstreifen 32 aufgeklebt wird. Auf einem hier als Substrat S1 dargestellten Datenträger (mit Text auf dessen Vorderseite V) sind dem Substrat S2 zugewandt zwei Kondensatorbeläge 36 und 38 ausgebildet. Das Substrat S1 wird zusammen mit den Kondensatorbelägen 36 und 38 derart auf das Substrat S2 aufgeklebt, dass die Beläge 36 und 38 einerseits und Bereiche des Leadstreifens 32 andererseits einander überlappen. Der Vorgang des Zusammenfügens der beiden Teile ist durch entgegengerichtete Pfeile rechts in Figur 4 verdeutlicht.

In einer weiteren, hier nicht dargestellten Variante ist der Leadstreifen derart angeordnet, dass nicht nur die beiden Kondensatorbeläge (der "eine Belag") überlappt wird, sondern auch der Transponderchip. Bei einer kombinierten Struktur, wie sie in Figur 3 dargestellt ist, kann der Chip auch beidseitig von einem Leadstreifen überlappt sein, so dass jegliche Manipulation am Transponderchip sofort erkennbar ist.

Bei den oben beschriebenen Ausführungsbeispielen befindet sich das Leitungsmuster der einen Spulenwindung in Verbindung mit dem Muster der beiden Beläge 6 und 8 (Figur 1) auf der Rückseite des Substrats. Text sowie graphische Elemente und Sicherheitsmerkmale sollen hier auf der Vorderseite V angeordnet sein. Man kann aber das Muster für die Spulenwindung und/ oder für die einen Kondensatorbeläge 6 und 8 auch auf der Vorderseite, das heißt der Textseite, der Ausweiskarte A anordnen. Dabei kann man die textliche und graphische Gestaltung der Vorderseite so ausbilden, dass das Spulen- und Kondensatormuster mit den Text- und Graphikelementen abgestimmt ausgeführt ist.

## Patentansprüche

1. Flachstückartig ausgebildete Artikel wie Chipkarten, Wertdokumente, Sicherheitspapiere, und dergleichen mit Transponder, umfassend folgende Merkmale:
ein Substrat (S),
einen Transponderchip (4),
eine auf das Substrat (S) aufgedruckte oder in das Substrat eingeätzte Antennenspule mit einer einzigen Spulenwindung (10), und
zwei Kondensatoren (C1, C2),
wobei auf dem Substrat (S) mindestens ein Belag (6, 8; 26, 28) der Kondensatoren (C1, C2) durch Aufdrucken oder Ätzen gebildet ist, und wobei mindestens der eine Belag (6, 8) der Kondensatoren (C1, C2) integral mit der einen Spulenwindung (10) ausgebildet ist, und
wobei der andere Belag (2) der Kondensatoren (C1, C2) durch ein bandförmiges Sicherheitselement gebildet ist, das eine Kunststofffolie aufweist, die eine metallische Beschichtung trägt und das Sicherheitselement derart auf dem Substrat aufgebracht ist, dass sich der eine Belag einerseits und das bandförmige Sicherheitselement oder ein Teil des bandförmigen Sicherheitselements andererseits überlappen, und
wobei der andere Belag (2') der Kondensatoren (C1, C2) auf der gleichen Seite des Substrats (S) wie der eine Belag (26, 28) ausgebildet ist oder dass der andere Belag (2) der Kondensatoren (C1, C2) auf der dem einen Belag (6, 8) abgewandten Seite des Substrats (S) ausgebildet ist, wobei das Sicherheitselement zusätzliche Beugungsstrukturen als Sicherheitsmerkmal für den Artikel (A) enthält,
wobei der eine Belag (6, 8) mit dem anderen Belag (2, 2') je einen Kondensator (C1, C2) bildet, wobei die eine Spulenwindung (10) parallel geschaltet ist zu den, über den anderen Belag (2) in Reihe geschalteten Kondensatoren (C1, C2), und
wobei der Transponderchip (4) parallel geschaltet ist zu der Parallelschaltung, bestehend aus der Spulenwindung (10) und der Kondensatorreihenschaltung (C1, C2).

2. Artikel nach Anspruch 1, **dadurch gekennzeichnet, dass** die Beläge der Köndensatoren (C1, C2) durch eine als Dielektrikum fungierende Lackschicht (14) voneinander getrennt sind.

3. Artikel nach einem der Ansprüche 1 oder 2, **gekennzeichnet durch** eine zusätzliche Substrat-Leitmaterialstreifen-Schicht (12; 22).

4. Artikel nach einem der Ansprüche 1 bis 3, **dadurch gekennzeichnet, dass** der Artikel als Sicherheitspapier für die Herstellung von Wertdokumenten ausgebildet ist.

5. Artikel nach einem der Ansprüche 1 bis 3, **dadurch gekennzeichnet, dass** der Artikel als Wertdokument ausgebildet ist.

## Claims

1. Articles configured in the manner of a flat piece such as chip cards, value documents, security papers and the like having a transponder, comprising the following features:
a substrate (S),
a transponder chip (4),
an antenna coil printed on the substrate (S) or etched into the substrate and
having a single coil winding (10), and
two capacitors (C1, C2),
there being formed on the substrate (S) by printing or etching at least one coating (6, 8; 26, 28) of the capacitors (C1, C2), and
at least the one coating (6, 8) of the capacitors (C1, C2) being configured integrally with the one coil winding (10), and
the other coating (2) of the capacitors (C1, C2) being formed by a band-shaped security element having a plastic foil bearing a metallic covering, and the security element being applied on the substrate such that the one coating, on the one hand, and the band-shaped security element or a part of the band-shaped security element, on the other hand, overlap, and
the other coating (2') of the capacitors (C1, C2) being configured on the same side of the substrate (S) as the one coating (26, 28), or the other coating (2) of the capacitors (C1, C2) being configured on the side of the substrate (S) facing away from the one coating (6, 8),
the security element containing additional diffraction structures as a security feature for the article (A),
the one coating (6, 8) forming with the other coating (2, 2') one capacitor (C1, C2) in each case, with the one coil winding (10) being connected in parallel to the capacitors (C1, C2) connected in series via the other coating (2), and
the transponder chip (4) being connected in parallel to the parallel connection, consisting of the coil winding (10) and the capacitor series connection (C1, C2).

2. The article according to claim 1, **characterized in that** the coatings of the capacitors (C1, C2) are separated from each other by a lacquer layer (14) acting as a dielectric.

3. The article according to either of claims 1 and 2, **characterized by** an additional substrate conductive material strip layer (12; 22).

4. The article according to any of claims 1 to 3, **characterized in that** the article is configured as a security paper for the production of value documents.

5. The article according to any of claims 1 to 3, **characterized in that** the article is configured as a value document.

## Revendications

1. Articles plats tel que cartes à puce, documents de valeur, papiers de sûreté et autres objets similaires avec transpondeur, comprenant les caractéristiques suivantes :
un substrat (S),
une puce de transpondeur (4),
une bobine d'antenne imprimée sur le substrat (S) ou gravée dans le substrat, ladite bobine d'antenne comportant un seul enroulement de bobine (10), et
deux condensateurs (C1, C2),
au moins un revêtement (6, 8; 26, 28) des condensateurs (C1, C2) étant constitué sur le substrat (S) par impression ou par gravure, et au moins le un revêtement (6, 8) des condensateurs (C1, C2) étant intégralement façonné avec le un enroulement de bobine (10), et
l'autre revêtement (2) des condensateurs (C1, C2) étant constitué par un élément de sécurité en forme de bande comportant un film plastique portant un enduit métallique, et l'élément de sécurité étant appliqué de telle façon sur le substrat que le un revêtement d'une part et l'élément de sécurité en forme de bande ou une partie de l'élément de sécurité en forme de bande d'autre part se chevauchent, et
l'autre revêtement (2') des condensateurs (C1, C2) étant façonné du même côté du substrat (S) que le un revêtement (26, 28)
ou l'autre revêtement (2) des condensateurs (C1, C2) étant façonné du côté du substrat (S) opposé au un revêtement (6, 8),
l'élément de sécurité renfermant des structures de diffraction supplémentaires en tant que caractéristique de sécurité pour l'article (A),
le un revêtement (6, 8) formant avec l'autre revêtement (2, 2') respectivement un condensateur (C1, C2), le un enroulement de bobine (10) étant branché en parallèle avec les condensateurs (C1, C2) branchés en série par le biais de l'autre revêtement (2), et
la puce de transpondeur (4) étant branchée en parallèle avec le branchement en parallèle consistant en l'enroulement de bobine (10) et le branchement de condensateurs en série (C1, C2).

2. Article selon la revendication 1, **caractérisé en ce que** les revêtements des condensateurs (C1, C2) sont séparés l'un de l'autre par une couche de vernis (14) faisant fonction de diélectrique.

3. Article selon une des revendications 1 ou 2, **caractérisé par** une couche supplémentaire en rubans de matériau conducteur (12; 22) de substrat.

4. Article selon une des revendications de 1 à 3, **caractérisé en ce que** l'article est réalisé en tant que papier de sûreté pour la fabrication de documents de valeur.

5. Article selon une des revendications de 1 à 3, **caractérisé en ce que** l'article est réalisé en tant que document de valeur.
